# EUROPÄISCHE PATENTSCHRIFT

(11) **EP 4 590 535 B1**
(45) Veröffentlichungstag und Bekanntmachung des Hinweises auf die Patenterteilung: **04.11.2026**
(21) Anmeldenummer: 23765239.1
(22) Anmeldetag: 05.09.2023
(51) Int. Cl.: B60K 35/10, B60K 35/22, B60K 35/50, B60K 35/60, B60K 35/81, G06F 3/0362, G06F 3/039

(54) **ANZEIGEVORRICHTUNG FÜR EIN FAHRZEUG**
DISPLAY DEVICE FOR A VEHICLE
DISPOSITIF D'AFFICHAGE POUR UN VÉHICULE

(30) Priorität: 20.09.2022 DE 102022124030
(43) Veröffentlichungstag der Anmeldung: 30.07.2025
(73) Patentinhaber: AUO Mobility Solutions Germany GmbH, 59557 Lippstadt (DE)
(72) Erfinder: SIEKKINEN, Tuomas, 33420 Tampere (FI); KEMPPINEN, Pasi, 33800 Tampere (FI); PUOLIMATKA, Ville-Veikko, 33450 Siivikkala (FI); VÄLIMÄKI, Pyry, 33310 Tampere (FI); SINKKONEN, Santeri, 33720 Tampere (FI)
(74) Vertreter: dompatent
(86) Internationale Anmeldenummer: PCT/EP2023/074241
(87) Internationale Veröffentlichungsnummer: WO 2024/061610

(56) Entgegenhaltungen:
- EP-B1- 3 350 662
- EP-B1- 3 535 637
- FR-A1- 3 033 422
- FR-A1- 3 072 478
- US-A1- 2013 314 377

## Beschreibung

Die Erfindung betrifft eine Anzeigevorrichtung für ein Fahrzeug und insbesondere eine Anzeigevorrichtung für ein Fahrzeug, bei der auf der Anzeigefläche ein manuell betätigbares Bedienelement in Form beispielsweise eines Drehstellers oder Dreh-/Drückstellers angeordnet ist.

Anzeigevorrichtungen für Fahrzeuge mit der zusätzlichen Möglichkeit, durch Berührung der Anzeigefläche auch Befehle eingeben zu können, also letztendlich Touchscreens, haben sich als Bedienkonzepte für Fahrzeuge bewährt. Dennoch hat sich im Laufe der Zeit herausgestellt, dass die Befehlseingabe durch Drehknöpfe oder Dreh-/Drücksteller mitunter komfortabler ist, was letztendlich applikationsabhängig ist.

Aus diesem Grund ist man in der Vergangenheit bereits dazu übergegangen, Drehsteller bzw. Dreh-/Drücksteller auf Touchscreens anzuordnen (siehe beispielsweise WO-A-2018/137944 oder WO-A-2018/114138).

Aus DE-A-10 2018 118 839 ist ein Dreh-/Drücksteller auf einem hinterleuchteten Display bekannt, der als Ring ausgeführt ist, innerhalb dessen auf dem Display angezeigte Information sichtbar ist.

In DE-A-10 2015 015 308 ist ein Bedienelement mit einem integrierten Display beschrieben, wobei das Display mittels gerichtetem Licht hinterleuchtet wird. Sofern derartige auf Anzeigenflächen von Anzeigenvorrichtungen angeordnete Bedienelemente ihrerseits über eine Anzeige verfügen sollen, wird diese typischerweise als eigenständige Anzeigeeinheit in das Bedienelement integriert. Da jedoch die Fläche, auf der das Bedienelement angeordnet ist, selbst als Anzeigefläche ausgebildet ist, bietet es sich auch an, die Anzeigefläche selbst in demjenigen Bereich als Anzeigefläche des Bedienelements zu nutzen, in dem das Bedienelement angeordnet ist. Das bedeutet dann, dass das Bedienelement einen "durchsichtigen" Bereich aufweist, durch den hindurch die Information der Display-Anzeigefläche sichtbar wird.

Hierbei ist jedoch zu beachten, dass die sichtbare Anzeigefläche des Bedienelements um die Höhe des Bedienelements von der Anzeigefläche des Displays absteht. Die Lichtstärke, mit der die hinterleuchtete alphanumerische oder grafische Information im Bereich der Display-Anzeigefläche, auf der das Bedienelement sich befindet, an dessen Vorderseite sichtbar ist, ist dadurch reduziert und auf einen eingeengten Blickwinkelbereich begrenzt.

Aus EP-B-3 535 637 ist eine Bedienvorrichtung für ein Fahrzeug bekannt, bei der auf der Anzeigefläche einer Anzeigevorrichtung ein Drehbedienelement angeordnet ist, das über eine eigene Anzeige verfügt.

Aus EP-B-3 350 662 ist ein Drehbedienelement mit einer Projektionslinse bekannt, das auf einer Anzeigefläche einer Anzeigevorrichtung angeordnet ist.

In FR-A-3 033 422 ist ein Drehbedienelement beschrieben, das über Lichtleiter zum Anzeigen der Information in demjenigen Bereich der Anzeigefläche einer Anzeigevorrichtung auf der Oberseite des Bedienelements verfügt.

Schließlich ist in US-A-2013/314377 ein Dateneingabegerät mit Touch-Sensorik beschrieben, wobei die optische Strahlung durch beispielsweise Lichtleiter auf die Touch-Oberfläche transportiert wird.

Aus FR-A-3 072 478 ist eine Anzeigevorrichtung mit den Merkmalen des Oberbegriffs des Anspruchs 1 bekannt.

Aufgabe der Erfindung ist es, eine Anzeigevorrichtung für ein Fahrzeug zu schaffen, bei dem auf einer Display-Anzeigefläche ein Bedienelement mit einem im Abstand zum Display angeordneten Anzeigebereich positioniert ist, innerhalb dessen alphanumerische oder grafische Information, die auf der Anzeigefläche des Displays angezeigt wird, ausreichend lichtstark dargestellt werden kann.

Zur Lösung dieser Aufgabe wird mit der Erfindung eine Anzeigevorrichtung für ein Fahrzeug vorgeschlagen, wobei die Anzeigevorrichtung versehen ist mit
- einem Display mit einer Anzeigefläche zur Anzeige von (grafischer und/oder alphanumerischer oder anderer Schriftzeichen-) Information,
- einem auf dem Display angeordneten Bedienelement, das manuell betätigbar ist,
- wobei das Bedienelement eine im Abstand zur Anzeigefläche des Displays angeordnete Vorderseite mit mindestens einem Anzeigebereich zur Anzeige von Information in dem mit dem Anzeigebereich der Vorderwand des Bedienelements fluchtenden Anzeigebereich der Anzeigefläche des Displays aufweist, und
- einer Hinterleuchtungseinheit zur Hinterleuchtung des Displays,
- wobei die Hinterleuchtungseinheit eine Lichtleiterplatte mit einer dem Display zugewandten Lichtaustrittsseite sowie mit einer dieser abgewandten Rückseite und Hinterleuchtungslicht in die Lichtleiterplatte einspeisende Hinterleuchtungslichtquellen aufweist,
- wobei die Lichtleiterplatte einen zwischen ihrer Rückseite und ihrer Lichtaustrittsseite angeordneten Lichtdurchlassbereich für kollimiertes Licht aufweist, der mit dem Anzeigebereich der Vorderseite des Bedienelements fluchtet,
- wobei die Hinterleuchtungseinheit ferner mindestens eine weitere Lichtquelle für kollimiertes Licht aufweist, das durch den Lichtdurchlassbereich der Lichtleiterplatte gelangt sowie an der Lichtaustrittsseite der Lichtleiterplatte austritt und nach einem Passieren des mit dem Anzeigebereich des Bedienelements fluchtenden Anzeigebereichs der Anzeigefläche des Displays die in diesem Bereich angezeigte Information hinterleuchtet und in dem Anzeigebereich des Bedienelements sichtbar macht,
- wobei in dem Bedienelement zwischen dessen Anzeigebereich und dem mit diesem fluchtenden Anzeigebereich der Anzeigefläche des Displays ein Diffusor zum Streuen des kollimierten Lichts für den Anzeigebereich des Bedienelements angeordnet ist.

Die erfindungsgemäße Anzeigevorrichtung weist ein Display mit einer Anzeigefläche zur Anzeige von Information, nämlich beispielsweise grafischer und/oder alphanumerischer Information oder Schriftzeicheninformation auf. Auf dem Display ist ein manuell betätigbares Bedienelement in Form beispielsweise eines Drehknopfs, eines Dreh-/Drückstellers oder einer oder mehrerer Bedientasten angeordnet. Das Bedienelement selbst weist eine im Abstand zur Anzeigefläche des Displays angeordnete Vorderseite auf, innerhalb der sich mindestens ein Anzeigebereich befindet, in dem Information angezeigt wird, die in demjenigen Anzeigebereich der Display-Anzeigefläche sichtbar ist, mit der der Anzeigebereich an der Vorderseite des Bedienelements fluchtet (d.h. auf einer gemeinsamen optischen Achse liegt).

Das Display wird hinterleuchtet mittels einer Hinterleuchtungseinheit, die eine Lichtleiterplatte oder eine Lichtleiterfolie mit einer dem Display zugewandten Lichtaustrittsseite sowie mit einer dieser abgewandten Rückseite aufweist. Ferner gehören zur Hinterleuchtungseinheit auch Hinterleuchtungslicht in die Lichtleiterplatte bzw. Lichtleiterfolie einspeisende Hinterleuchtungslichtquellen und ggfs. auch eine Reflektorschicht an der Rückseite des Lichtleiters, die seiner Lichtaustrittsseite abgewandt ist. Die Lichtleiterplatte (wenn im Folgenden von Lichtleiter oder Lichtleiterplatte die Rede ist, ist damit auch die Ausbildung des Lichtleiters als Folie gemeint) weist zwischen ihrer Rückseite und ihrer Lichtaustrittsseite einen Lichtdurchlassbereich für kollimiertes Licht auf, wobei erfindungsgemäß dieser Lichtdurchlassbereich mit dem Anzeigebereich an der Vorderseite des Bedienelements fluchtet, d.h. mit diesem Anzeigebereich auf einer gemeinsamen optischen Achse liegt. Die Hinterleuchtungseinheit ist zusätzlich mit mindestens einer weiteren Lichtquelle versehen, die anders als die zuvor genannten Hinterleuchtungslichtquellen kollimiertes Licht abgibt, das durch den Lichtdurchlassbereich der Lichtleiterplatte gelangt sowie an der Lichtaustrittsseite der Lichtleiterplatte austritt und nach dem Passieren des mit dem Anzeigebereich des Bedienelements fluchtenden Anzeigebereich der Anzeigefläche des Displays die in diesem Bereich angezeigte Information hinterleuchtet und in dem Anzeigebereich des Bedienelements sichtbar macht, und zwar lichtintensiver als es das aus der Lichtaustrittsseite des Lichtleiters austretende Hinterleuchtungslicht leisten könnte, wenn dieses aus der Lichtaustrittsseite auch im Bereich des Lichtdurchlassbereichs des Lichtleiters für kollimiertes Licht austreten würde. Damit ferner diese dort sichtbare Information über einen möglichst großen Blickwinkelbereich sichtbar ist, befindet sich in dem Bedienelement zwischen dessen Anzeigebereich und dem mit diesem fluchtenden Anzeigebereich der Anzeigefläche des Displays ein Diffusor zum Streuen des kollimierten Lichts für den Anzeigebereich des Bedienelements.

Erfindungsgemäß dient der Lichtleiter der Hinterleuchtungseinheit nicht nur der großflächigen und homogenen Hinterleuchtung der Display-Anzeigefläche, sondern die Lichtleiterplatte wird in mindestens einem Lichtdurchlassbereich von kollimiertem Licht "durchleuchtet", welches damit gebündelt und weitaus stärker fokussiert als im übrigen Bereich der Anzeigefläche auf denjenigen Anzeigebereich der Display-Anzeigefläche hinterleuchtet, der mit dem Anzeigebereich an der Vorderseite des Bedienelements fluchtet und somit auf einer gemeinsamen Achse mit dem Lichtdurchlassbereich der Lichtleiterplatte liegt. Damit dieses kollimierte Licht nun wiederum über einen vergleichsweise großen Blickwinkelbereich von dem Anzeigebereich an der Vorderseite des Bedienelements abgestrahlt wird, befindet sich in dem Bedienelement vorzugsweise nahe der Vorderseite ein Diffusorelement zum Streuen des kollimierten Hinterleuchtungslichts für diesen Anzeigebereich.

Durch dieses Hinterleuchtungskonzept gelingt es, dass sowohl die Anzeigefläche des Displays außerhalb des mindestens einen auf dem Display angeordneten Bedienelements homogen und lichtstark hinterleuchtet ist, sondern auch der oberhalb der Display-Anzeigefläche angeordnete Anzeigebereich des mindestens einen Bedienelements ausreichend stark hinterleuchtet ist und innerhalb eines großen Blickwinkelbereichs betrachtet werden kann.

Wie bereits oben beschrieben, kann das Bedienelement als mindestens eine Taste und/oder mindestens ein Drehsteller und/oder mindestens ein Dreh-/Drücksteller ausgebildet sein. Allgemein gilt, dass das Bedienelement über eine Konstruktion für das haptische Feedback (passiv oder aktiv) verfügen kann. Sofern das Bedienelement mit verstellbaren Elementen versehen ist, kann diese Verstellung rastend erfolgen.

Die mindestens eine Lichtquelle für kollimiertes Licht weist zweckmäßigerweise mindestens ein Leuchtmittel, insbesondere mindestens eine LED, sowie einen Reflektor und/oder eine Linse auf.

Der Lichtdurchlassbereich der Lichtleiterplatte für kollimiertes Licht kann zweckmäßigerweise als ein Lichtleiter oder als eine Durchgangsöffnung der

Lichtleiterplatte oder als integraler Bestandteil der Lichtleiterplatte ausgebildet sein.

In vorteilhafter Ausgestaltung der Erfindung kann vorgesehen sein, dass die mindestens eine Lichtquelle für kollimiertes Licht der Rückseite der Lichtleiterplatte sowie dem Lichtdurchlassbereich der Lichtleiterplatte für kollimiertes Licht zugewandt angeordnet ist. Dieses kollimierte Licht gelangt also sozusagen als "direct backlight" in den Lichtdurchlassbereich der Lichtleiterplatte hinein.

Alternativ dazu kann vorgesehen sein, dass die Lichtquelle für kollimiertes Licht mindestens ein Leuchtmittel, insbesondere mindestens eine LED, und einen Lichtleiter aufweist, der mit einem Lichtaustrittsende, das dem Lichtdurchlassbereich der Lichtleiterplatte für kollimiertes Licht gegenüberliegend oder in dem Lichtdurchlassbereich der Lichtleiterplatte für kollimiertes Licht angeordnet ist, und mit einem Lichteintrittsende versehen ist, das außerhalb der Rückseite der Lichtleiterplatte angeordnet ist. Die Lichtquelle bzw. die Lichtquellen für kollimiertes Licht strahlen also in einen Lichtleiter ein, dessen Lichtaustrittsende entweder in einer Durchgangsöffnung der Lichtleiterplatte angeordnet ist oder der dem Lichtdurchlassbereich der Lichtleiterplatte gegenüberliegend angeordnet ist.

Das erfindungsgemäße Anzeigenkonzept kann bei einer Anzeigevorrichtung auch mehrfach realisiert sein, so dass eine derartige Anzeigevorrichtung versehen ist mit mehreren Bedienelementen und mehreren jeweils mit deren Anzeigebereichen fluchtenden Anzeigebereichen auf der Anzeigefläche, denen in der Lichtleiterplatte der Hinterleuchtungseinheit jeweils ein Lichtdurchlassbereich für kollimiertes Licht zugeordnet ist, wobei die Hinterleuchtungseinheit für jeden Lichtdurchlassbereich mindestens eine Lichtquelle für kollimiertes Licht oder mindestens eine allen Lichtdurchlassbereichen gemeinsame Lichtquelle für kollimiertes Licht aufweist, von der aus sich Lichtleiter zu den Lichtdurchlassbereichen der Lichtleiterplatte erstrecken.

In weiterer zweckmäßiger Ausgestaltung der Erfindung kann vorgesehen sein, dass die mindestens eine Lichtquelle für kollimiertes Licht eine Laserdiode und insbesondere eine RGB-Laserdiodenanordnung aufweist.

In vorteilhafterweise sind die Lichtquellen für das Hinterleuchtungslicht der Rückseite der Lichtleiterplatte und/oder einem Seitenrandbereich der Lichtleiterplatte gegenüberliegend angeordnet.

Typischerweise sind die Hinterleuchtungslichtquellen als LEDs ausgeführt.

Die Erfindung wird nachfolgend anhand eines Ausführungsbeispiels und unter Bezugnahme auf die Zeichnung näher erläutert. Im Einzelnen zeigen dabei:
- Fig. 1: eine Ansicht auf die Instrumententafel eines Fahrzeugs mit erfindungsgemäßer Anzeigevorrichtung, die zugleich auch als Bedienvorrichtung eingesetzt wird,
- Fig. 2: einen Schnitt entlang der Linie II-II durch den Bereich unten rechts der Anzeigevorrichtung, wie in Fig. 1 gezeigt,
- Fig. 3: ein Beispiel für die Einspeisung des Hinterleuchtungslichtes für die Bereiche der Anzeigefläche des Displays, auf denen sich kein zusätzliches manuelles Bedienelement befindet, und
- Fign. 4a bis 4c: drei Beispiele für die Konstruktion von Lichtquellen zur Abgabe von im Wesentlichen kollimiertem bzw. gebündeltem Licht für die Hinterleuchtung desjenigen Anzeigebereichs der Anzeigefläche des Displays der Anzeigevorrichtung, auf dem das in Form eines Drehstellers ausgebildete manuelle Bedienelement angeordnet ist,
- Fig. 5: ein Beispiel für die Einspeisung von RGB-Kollimationslicht in den mit dem manuellen Bedienelement fluchtenden Bereich des Lichtleiters, in dem dieser seinen Lichtdurchlassbereich für kollimiertes Licht aufweist.

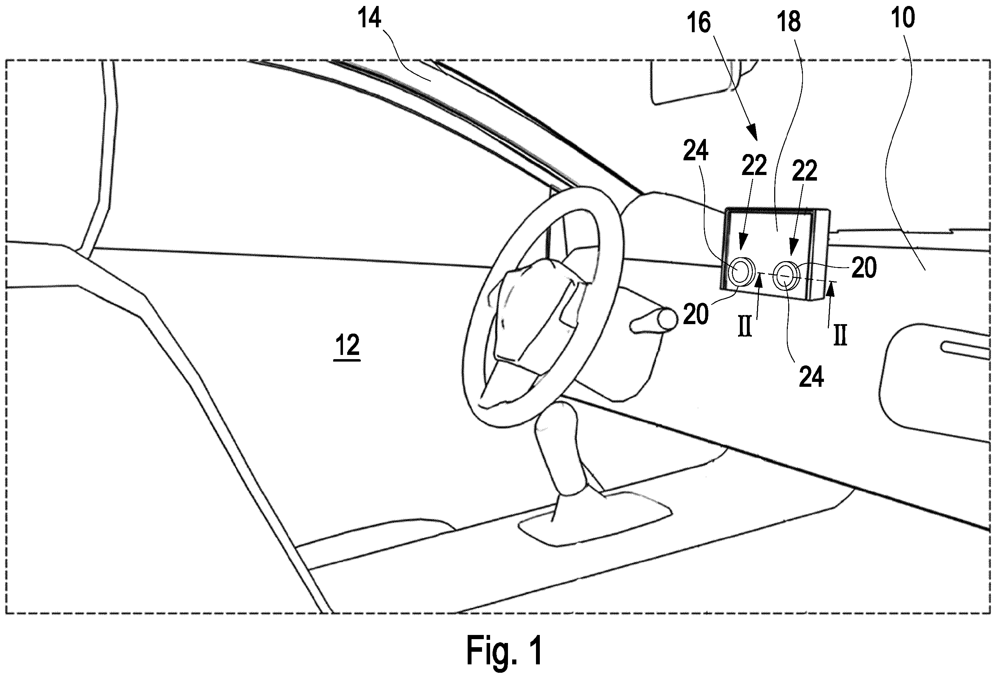

Fig. 1 zeigt eine perspektivische Ansicht auf die Instrumententafel 10 im Innenraum 12 eines Fahrzeugs 14, die in diesem Ausführungsbeispiel mit einer Bedienvorrichtung 16 versehen ist, die eine Anzeigevorrichtung 18 mit in diesem Ausführungsbeispiel zwei als Drehsteller 20 ausgebildeten, manuell bedienbaren Bedienelementen 22 aufweist. Die beiden Bedienelemente 22 weisen Anzeigebereiche 24 auf, in denen diejenige (alphanumerische oder graphische oder anderweitige Schriftzeichen-) Information sichtbar ist, die in dem Bereich der Anzeigevorrichtung 18 unterhalb der Bedienelemente 22 angezeigt ist.

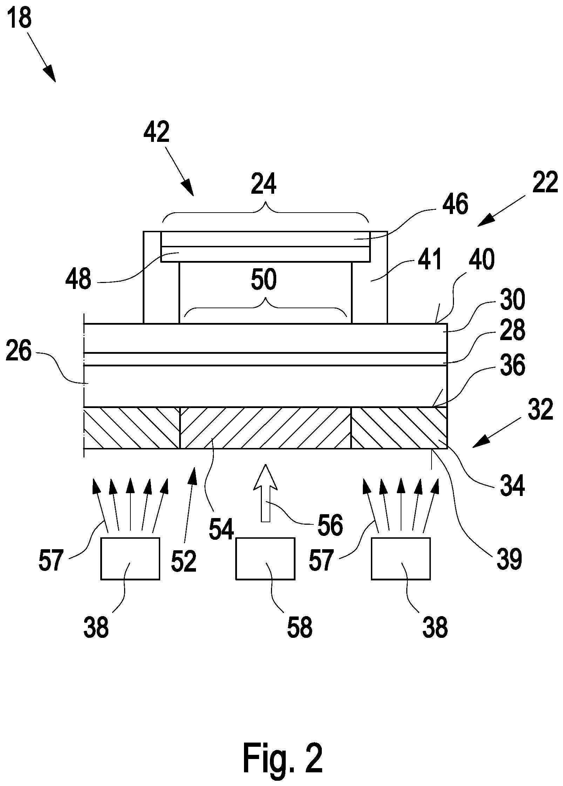

Die für die Erfindung hauptsächlich relevanten Komponenten der Anzeigevorrichtung 18 sind in Fig. 2 gezeigt. Die Anzeigevorrichtung 18 weist demnach ein Display 26 in Form typischerweise eines LCD-Displays mit einem Touchpanel 28 als Berührungssensorik (nicht zwingend erforderlich) und einer Abdeckscheibe 30 auf. Zur Hinterleuchtung des Displays 26 dient eine Hinterleuchtungseinheit 32, die eine Lichtleiterplatte 34 mit einer dem Display 26 zugewandten Lichtaustrittsseite 36 sowie Hinterleuchtungslichtquellen 38 aufweist. In diesem Ausführungsbeispiel befinden sich die Hinterleuchtungslichtquellen 38 der Rückseite 39 der Lichtleiterplatte 34 zugewandt.

Auf der Abdeckscheibe 30 befindet sich sozusagen die Anzeigefläche 40 der Anzeigevorrichtung 18, auf der das Bedienelement 22 angeordnet ist. Dieses Bedienelement ist als (hohler) Ring 41 ausgeführt, dessen der Anzeigefläche 40 abgewandtes vorderes Ende, also dessen Vorderseite 42 den Anzeigebereich 24 aufweist, der als Abdeckscheibe 46 ausgebildet ist, wobei sich innerhalb des Ringes 41 ein Diffusor 48 befindet.

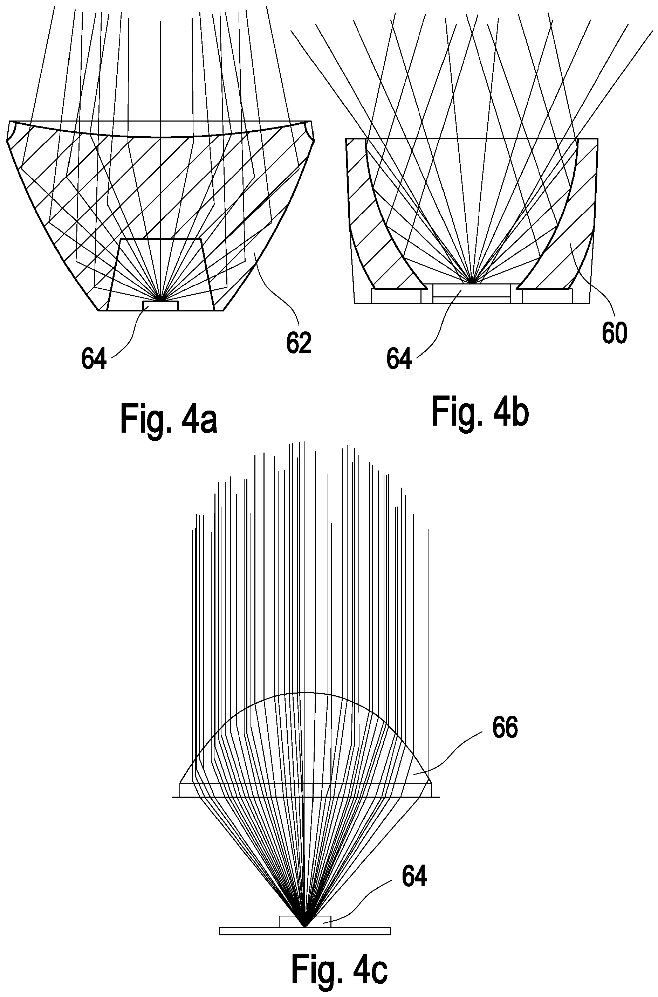

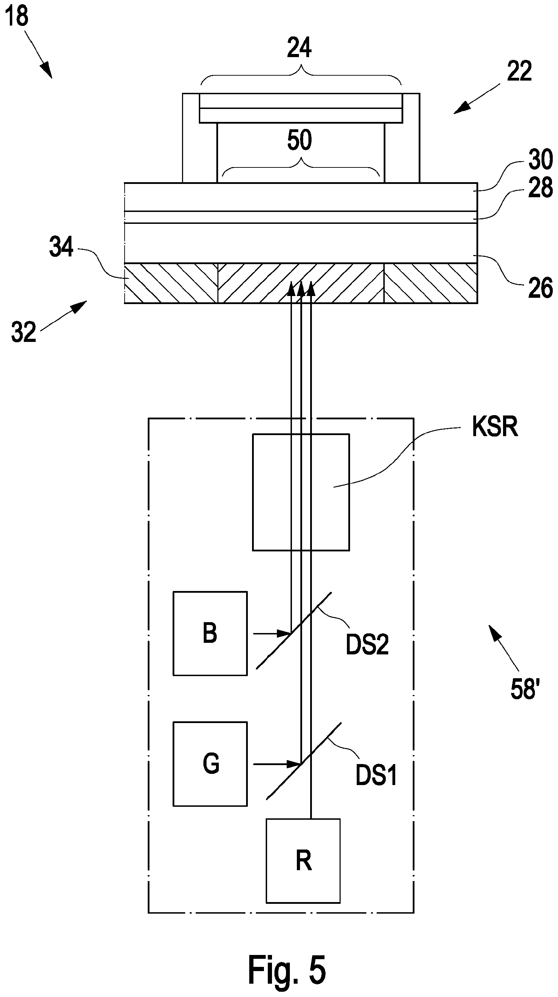

Wie anhand von Fig. 2 zu erkennen ist, befindet sich das Bedienelement 22 in einem Anzeigebereich 50 der Anzeigefläche 40 der Anzeigevorrichtung 18, der mit einem Bereich 52 der Lichtleiterplatte 34 fluchtet, wobei in diesem Bereich 52 der Lichtleiterplatte 34 diese mit einem Lichtdurchlassbereich 54 für kollimiertes Licht versehen ist. Das kollimierte oder allgemein ausgedrückt das gegenüber den Hinterleuchtungslichtquellen 38 gebündelte Licht 56 ist in Fig. 2 durch den Pfeil angedeutet. Bei der Lichtquelle 58 für dieses kollimierte Licht handelt es sich beispielsweise um eine Lichtquelle, wie sie in den Fign. 4 und 5 gezeigt ist, auf die später noch eingegangen werden wird. Dem gegenüber ist das Hinterleuchtungslicht der Hinterleuchtungslichtquellen 38 "aufgefächert" (angedeutet durch die Pfeile 57). Typischerweise befindet sich zwischen der Lichtaustrittsseite 36 der Lichtleiterplatte 34 und dem Display 26 noch eine Diffusorschicht zur Vergleichmäßigung des Hinterleuchtungslichts, die in ihrem mit dem Lichtdurchlassbereich 54 fluchtenden Bereich eine Aussparung aufweisen sollte, damit das kollimierte Licht erst nach dem Passieren des Displays 26 durch den Diffusor 48 des Bedienelements 22 gestreut wird.

Die Besonderheit des hier vorgestellten Konzepts ist darin zu sehen, dass durch das gebündelte Licht 56 die Information im Anzeigebereich 50 der Anzeigefläche 40 der Anzeigevorrichtung 18, da sie von dem kollimierten bzw. gebündelten Licht der Kollimationslichtquelle 58 hinterleuchtet ist, im Anzeigebereich 24 an der Vorderseite 42 des Bedienelements 22 angezeigt wird, wo das Licht durch den Diffusor 48 gestreut wird, damit die an der Vorderseite 42 des Bedienelements 22 sichtbare Information über einen weiten Blickwinkelbereich betrachtet werden kann.

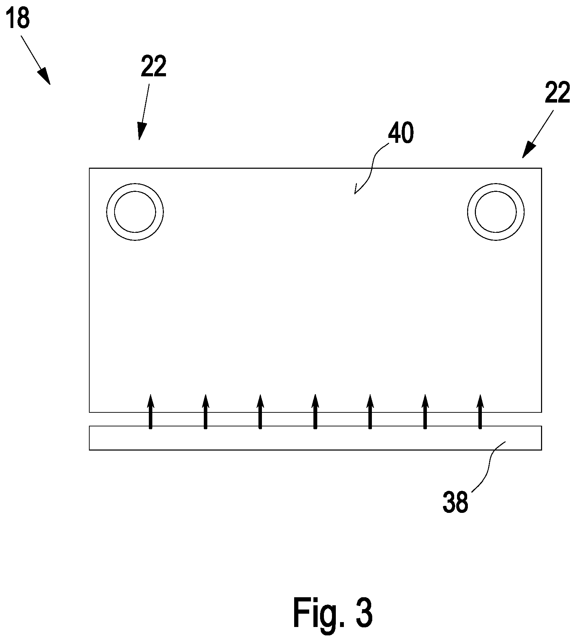

In Fig. 3 ist eine Alternative für die Hinterleuchtung der Anzeigefläche 40 der Anzeigevorrichtung 18 gezeigt. In diesem Ausführungsbeispiel erfolgt die Hinterleuchtung durch Hinterleuchtungslichtquellen 38, die seitlich in die in Fig. 3 nicht gezeigte Lichtleiterplatte 34 einstrahlen. Hier gilt es zu beachten, dass Lichtdurchlassbereiche 54 der Lichtleiterplatte 34 (siehe beispielsweise Fig. 2) zu einer Schattenwirkung des seitlich eingestrahlten Hinterleuchtungslichts führen können. Die Lichtleiterplatte 34 ist allerdings typischerweise mit einer Reflektionsfolie hinterlegt, so dass Hinterleuchtungslicht durch interne Reflektion und Reflektion an der Reflektionsfolie letztendlich auch in die vermeintlichen "Schattenbereiche" der Bedienelemente 22 gelangen kann.

In den Fign. 4a bis 4c sind drei Ausführungsbeispiele für die Ausgestaltung der Kollimationslichtquelle 58 gezeigt. Die Kollimationslichtquelle kann, wie in Fig. 4b gezeigt, mit einem Reflektors 60 versehen sein. Alternativ kann, wie in Fig. 4a gezeigt, eine TIR-Linse 62, d.h. eine Linse mit totaler interner Reflektion, verwendet werden. In beiden Fällen wird das Licht beispielsweise einer LED-Lichtquelle 64 gerichtet abgestrahlt.

Alternativen zu den Ansätzen gemäß den Fign. 4a und 4b kann auch eine asphärische Linse 66 eingesetzt werden, wie es in Fig. 4c gezeigt ist. Schließlich betrifft eine weitere Variante der Ausgestaltung der Kollimationslichtquelle 58 die Verwendung einer Fresnel-Linse.

Eine weitere Möglichkeit der Hinterleuchtung des Displays 26 in dem Bereich 50 der Anzeigefläche 40, in dem sich das Bedienelement 22 befindet, besteht in der Verwendung von Laser-Lichtquellen (beispielsweise Laser-LEDs). Die Verwendung eines RGB-Lasers ermöglicht die Darstellung volumetrischer Hologramme zur Sichtbarmachung von 3D-Darstellungen.

Schließlich kann das kollimierte Licht im Anzeigebereich 50 der Anzeigefläche 40 der Anzeigevorrichtung 18 auch durch in diesem Bereich angeordnete Sub-Pixel-Mikrolinsen erzielt werden. In diesem Ausführungsbeispiel ist es dann nicht zwingend erforderlich, dass in demjenigen Bereich der Lichtaustrittsseite 36 der Lichtleiterplatte 34, der auf einer gemeinsamen optischen Achse mit dem Anzeigebereich 50 der Anzeigefläche 40 der Anzeigevorrichtung 18 liegt, kollimiertes Licht austritt.

Als weitere Möglichkeit der Einspeisung von kollimiertem Licht in einen Lichtdurchlassbereich 54 der Lichtleiterplatte 34 sei auf die Verwendung von Lichtleitern verwiesen, deren Enden entweder einem Lichdurchlassbereich 54 oder mehreren Lichtdurchlassbereichen 54 der Lichtleiterplatte 34 gegenüberliegend angeordnet sind oder aber in Durchgangsöffnungen der Lichtleiterplatte 34 eingesetzt sind, wobei die Lichteintrittsenden des oder der Lichtleiter kollimiertes Licht von einer Kollimationslichtquellen 58 empfangen, die entfernt und insbesondere nicht hinter der Lichtleiterplatte 34 angeordnet sind.

Fig. 5 zeigt ein Ausführungsbeispiel für die Lichtquelle 58' für kollimiertes Licht. Sofern in der Darstellung gemäß Fig. 5 Teile der Anzeigevorrichtung 18 gezeigt sind, sind sie mit den gleichen Bezugszeichen wie in Fig. 2 versehen.

Die Lichtquelle 58' ist als kollimierte Laserlichtquelle ausgebildet und weist drei (z.B. Halbleiter-)Laserlichtquellen R, G, B für farbiges Laserlicht auf. Über dichroitische Spiegel DS1 und DS2 gelangen die Lichtstrahlen der drei Laser-lichtquellen parallel gerichtet durch ein optisches Element KSR zur Kollimation und zur Speckle-Reduktion.

Die Besonderheit der erfindungsgemäßen Anzeigevorrichtung ist darin zu sehen, dass in denjenigen Bereichen der Anzeigefläche, in denen sich kein oder keine Bedienelemente befinden, das Hinterleuchtungslicht, wie bei hinterleuchteten Anzeigevorrichtungen für gewöhnlich gegeben, vergleichsweise ungerichtet und damit gestreut austritt, wohingegen das Hinterleuchtungslicht in den von dem oder den manuellen Bedienelementen besetzten Bereichen der Anzeigevorrichtung deutlich gerichteter und insbesondere gebündelt austritt, um erst über einen im Abstand zur Anzeigefläche angeordneten Diffusor, nämlich an der Vorderseite des Bedienelement bzw. der Vorderseiten der Bedienelemente gestreut zu werden. Dieses Konzept kann bei Anzeigevorrichtungen mit einem oder mit mehreren Bedienelementen angewendet werden, wobei die Bedienelemente unterschiedliche Höhen aufweisen können. Die Lichtleiterplatte kann einstückig ausgebildet sein; der oder die Lichtdurchlassbereiche können aus dem gleichen oder einem anderen Lichtleitermaterial bestehen, wie die Lichtleiterplatte im Übrigen.

### BEZUGSZEICHENLISTE

- 2: Ausführungsbeispiel
- 10: Instrumententafel
- 12: Innenraum
- 14: Fahrzeug
- 16: Bedienvorrichtung
- 18: Anzeigevorrichtung
- 20: Drehsteller
- 22: Bedienelementen
- 24: Anzeigebereich an der Vorderseite des Bedienelements
- 26: Display
- 28: Touchpanel
- 30: Abdeckscheibe
- 32: Hinterleuchtungseinheit
- 34: Lichtleiterplatte
- 36: Lichtaustrittsseite
- 38: Hinterleuchtungslichtquellen
- 39: Rückseite der Lichtleiterplatte
- 40: Anzeigefläche des Displays
- 41: Ring des Bedienelements
- 42: Vorderseite des Bedienelements
- 46: Abdeckscheibe
- 48: Diffusor
- 50: Anzeigebereich auf der Anzeigefläche des Displays
- 52: Bereich
- 54: Lichtdurchlassbereich
- 56: gebündeltes Licht
- 58: Kollimationslichtquelle
- 58': Kollimationslichtquelle
- 60: Reflektor
- 62: TIR-Linse
- 64: LED-Lichtquelle
- 66: asphärische Linse
- DS1: Spiegel
- DS2: Spiegel
- KSR: optisches Element zur Kollimation und Speckle-Reduktion
- B: Laser
- G: Laser
- R: Laser

## Patentansprüche

1. Anzeigevorrichtung für ein Fahrzeug, mit
- einem Display (26) mit einer Anzeigefläche (40) zur Anzeige von Information,
- einem auf dem Display (26) angeordneten Bedienelement (22), das manuell betätigbar ist,
- wobei das Bedienelement (22) eine im Abstand zur Anzeigefläche (40) des Displays (26) angeordnete Vorderseite (42) mit mindestens einem Anzeigebereich (24) zur Anzeige von Information in dem mit dem Anzeigebereich (24) der Vorderwand des Bedienelements (22) fluchtenden Anzeigebereich (50) der Anzeigefläche (40) des Displays (26) aufweist, und
- einer Hinterleuchtungseinheit (32) zur Hinterleuchtung des Displays (26),
- wobei die Hinterleuchtungseinheit (32) eine Lichtleiterplatte (34) mit einer dem Display (26) zugewandten Lichtaustrittsseite (36) sowie mit einer dieser abgewandten Rückseite (39) und Hinterleuchtungslicht in die Lichtleiterplatte (34) einspeisende Hinterleuchtungslichtquellen (38) aufweist und wobei in dem Bedienelement (22) zwischen dessen Anzeigebereich (24) und dem mit diesem fluchtenden Anzeigebereich (50) der Anzeigefläche (40) des Displays (26) ein Diffusor (48) zum Streuen des kollimierten Lichts für den Anzeigebereich (24) des Bedienelements (22) angeordnet ist,
**dadurch gekennzeichnet,**
- **dass** die Lichtleiterplatte (34) einen zwischen ihrer Rückseite (39) und ihrer Lichtaustrittsseite (36) angeordneten Lichtdurchlassbereich (54) für kollimiertes Licht aufweist, der mit dem Anzeigebereich (24) der Vorderseite (42) des Bedienelements (22) fluchtet, und
- **dass** die Hinterleuchtungseinheit (32) ferner mindestens eine weitere Lichtquelle für kollimiertes Licht aufweist, das durch den Lichtdurchlassbereich (54) der Lichtleiterplatte (34) gelangt sowie an der Lichtaustrittsseite (36) der Lichtleiterplatte (34) austritt und nach einem Passieren des mit dem Anzeigebereich (24) des Bedienelements (22) fluchtenden Anzeigebereichs (50) der Anzeigefläche (40) des Displays (26) die in diesem Bereich angezeigte Information hinterleuchtet und in dem Anzeigebereich (24) des Bedienelements (22) sichtbar macht.

2. Anzeigevorrichtung nach Anspruch 1, **dadurch gekennzeichnet, dass** das Bedienelement (22) als mindestens eine Taste und/oder mindestens ein Drehsteller (20) und/oder mindestens ein Dreh-/Drücksteller ausgebildet ist.

3. Anzeigevorrichtung nach Anspruch 1 oder 2, **dadurch gekennzeichnet, dass** die mindestens eine Lichtquelle für kollimiertes Licht mindestens ein Leuchtmittel, insbesondere mindestens eine LED, sowie einen Reflektor (60) und/oder eine Linse (62) aufweist.

4. Anzeigevorrichtung nach einem der Ansprüche 1 bis 3, **dadurch gekennzeichnet, dass** der Lichtdurchlassbereich (54) der Lichtleiterplatte (34) für kollimiertes Licht als ein Lichtleiter oder als eine Durchgangsöffnung der Lichtleiterplatte (34) ausgebildet ist.

5. Anzeigevorrichtung nach einem der Ansprüche 1 bis 4, **dadurch gekennzeichnet, dass** die mindestens eine Lichtquelle für kollimiertes Licht der Rückseite (39) der Lichtleiterplatte (34) sowie dem Lichtdurchlassbereich (54) der Lichtleiterplatte (34) für kollimiertes Licht zugewandt angeordnet ist.

6. Anzeigevorrichtung nach einem der Ansprüche 1 oder 2, **dadurch gekennzeichnet, dass** die Lichtquelle für kollimiertes Licht mindestens ein Leuchtmittel, insbesondere mindestens eine LED, und einen Lichtleiter aufweist, der mit einem Lichtaustrittsende, das dem Lichtdurchlassbereich (54) der Lichtleiterplatte (34) für kollimiertes Licht gegenüberliegend oder in dem Lichtdurchlassbereich (54) der Lichtleiterplatte (34) für kollimiertes Licht angeordnet ist, und mit einem Lichteintrittsende versehen ist, das außerhalb der Rückseite (39) der Lichtleiterplatte (34) angeordnet ist.

7. Anzeigevorrichtung nach Anspruch 6, **gekennzeichnet durch** mehrere Bedienelemente (22) und mehrere jeweils mit deren Anzeigebereichen (24) fluchtende Anzeigebereiche (50) auf der Anzeigefläche (40) des Displays (26), denen in der Lichtleiterplatte (34) der Hinterleuchtungseinheit (32) jeweils ein Lichtdurchlassbereich (54) für kollimiertes Licht zugeordnet ist, wobei die Hinterleuchtungseinheit (32) für jeden Lichtdurchlassbereich (54) mindestens eine Lichtquelle für kollimiertes Licht oder mindestens eine allen Lichtdurchlassbereichen (54) gemeinsame Lichtquelle für kollimiertes Licht aufweist, von der aus sich Lichtleiter zu den Lichtdurchlassbereichen (54) der Lichtleiterplatte (34) erstrecken.

8. Anzeigevorrichtung nach einem der Ansprüche 1 bis 7, **dadurch gekennzeichnet, dass** die mindestens eine Lichtquelle für kollimiertes Licht (58) eine Laserdiode und insbesondere eine RGB-Laserdiodenanordnung aufweist.

9. Anzeigevorrichtung nach einem der Ansprüche 1 bis 8, **dadurch gekennzeichnet, dass** die Lichtquellen der Rückseite der Lichtleiterplatte (34) und/oder einem Seitenrandbereich der Lichtleiterplatte (34) gegenüberliegend angeordnet sind.

10. Anzeigevorrichtung nach einem der Ansprüche 1 bis 9, **dadurch gekennzeichnet, dass** die Hinterleuchtungslichtquellen (38) LEDs aufweisen.

## Claims

1. A display device for a vehicle, comprising
- a display (26) having a display surface (40) for displaying information,
- an operating element (22) arranged on the display (26), which can be operated manually,
- wherein the operating element (22) has a front side (42) arranged at a distance from the display surface (40) of the display (26) with at least one display area (24) for displaying information in the display area (50) of the display surface (40) of the display (26) aligned with the display area (24) of the front wall of the operating element (22), and
- a backlighting unit (32) for backlighting the display (26),
- wherein the backlighting unit (32) has a light guide plate (34) with a light exit side (36) facing the display (26) and with a rear side (39) facing away therefrom and backlighting light sources (38) feeding backlight into the light guide plate (34), and wherein a diffuser (48) for diffusing the collimated light for the display area (24) of the operating element (22) is arranged in the operating element (22) between its display area (24) and the display area (50) of the display surface (40) of the display (26) which is aligned therewith.
**characterized in that**
- the light guide plate (34) has a light transmission area (54) for collimated light arranged between its rear side (39) and its light exit side (36), which area is aligned with the display area (24) of the front side (42) of the operating element (22), and
- the backlighting unit (32) further comprises at least one further light source for collimated light which passes through the light transmission area (54) of the light guide plate (34) and emerges at the light exit side (36) of the light guide plate (34) and, after passing through the display area (50) of the display surface (40) of the display (26) which is aligned with the display area (24) of the operating element (22), backlights the information displayed in this area and makes it visible in the display area (24) of the operating element (22).

2. The display device according to claim 1, **characterized in that** the operating element (22) is configured as at least one button and/or at least one rotary adjuster (20) and/or at least one rotary/push adjuster.

3. The display device according to claim 1 or 2, **characterized in that** the at least one light source for collimated light has at least one illuminant, in particular at least one LED, as well as a reflector (60) and/or a lens (62).

4. The display device according to any one of claims 1 to 3, **characterized in that** the light transmission area (54) of the light guide plate (34) for collimated light is configured as a light guide or as a passage opening of the light guide plate (34).

5. The display device according to any one of claims 1 to 4, **characterized in that** the at least one light source for collimated light is arranged facing the rear side (39) of the light guide plate (34) and the light transmission area (54) of the light guide plate (34) for collimated light.

6. The display device according to any one of claims 1 or 2, **characterized in that** the light source for collimated light comprises at least one illuminant, in particular at least one LED, and a light guide which is provided with a light exit end which is arranged opposite the light transmission area (54) of the light guide plate (34) for collimated light or in the light transmission area (54) of the light guide plate (34) for collimated light, and with a light entry end which is arranged outside the rear side (39) of the light guide plate (34).

7. The display device according to claim 6, **characterized by** several operating elements (22) and several display areas (50) on the display surface (40) of the display (26), each of which is aligned with its display areas (24) and to which a respective light transmission area (54) for collimated light is assigned in the light guide plate (34) of the backlighting unit (32), wherein the backlighting unit (32) has at least one light source for collimated light for each light transmission area (54) or at least one light source for collimated light common to all light transmission areas (54), from which light guides extend to the light transmission areas (54) of the light guide plate (34).

8. The display device according to any one of claims 1 to 7, **characterized in that** the at least one light source for collimated light (58) comprises a laser diode and in particular an RGB laser diode arrangement.

9. The display device according to any one of claims 1 to 8, **characterized in that** the light sources are arranged opposite the rear side of the light guide plate (34) and/or opposite a side edge area of the light guide plate (34).

10. The display device according to any of claims 1 to 9, **characterized in that** the backlighting light sources (38) comprise LEDs

## Revendications

1. Dispositif d'affichage pour un véhicule, comprenant
- un écran (26) doté d'une surface d'affichage (40) destinée à afficher des informations,
- un élément de commande (22) disposé sur l'écran (26) et apte à être actionné manuellement,
- l'élément de commande (22) présentant une face avant (42) disposée à distance de la surface d'affichage (40) de l'écran (26) et dotée d'au moins une zone d'affichage (24) destinée à afficher des informations dans la zone d'affichage (50) de la surface d'affichage (40) de l'écran (26) alignée avec la zone d'affichage (24) de la face avant de l'élément de commande (22), et
- une unité de rétroéclairage (32) destinée à rétroéclairer l'écran (26),
- l'unité de rétroéclairage (32) comprenant une plaque de guidage de lumière (34) qui présente une face de sortie de lumière (36) tournée vers l'écran (26) ainsi qu'une face arrière (39) détournée de celle-ci, et des sources de lumière de rétroéclairage (38) qui injectent une lumière de rétroéclairage dans la plaque de guidage de lumière (34), sachant qu'un diffuseur (48) destiné à diffuser la lumière collimatée pour la zone d'affichage (24) de l'élément de commande (22) est disposé dans l'élément de commande (22), entre sa zone d'affichage (24) et la zone d'affichage (50) de la surface d'affichage (40) de l'écran (26) alignée avec celle-ci,
**caractérisé en ce que**
- la plaque de guidage de lumière (34) comporte une zone de passage de lumière (54) pour la lumière collimatée, disposée entre sa face arrière (39) et sa face de sortie de lumière (36), laquelle zone est alignée avec la zone d'affichage (24) de la face avant (42) de l'élément de commande (22), et
- **en ce que** l'unité de rétroéclairage (32) comporte en outre au moins une autre source de lumière pour la lumière collimatée qui traverse la zone de passage de lumière (54) de la plaque de guidage de lumière (34) et qui sort par la face de sortie de lumière (36) de la plaque de guidage de lumière (34) et qui, après avoir traversé la zone d'affichage (50) de la surface d'affichage (40) de l'écran (26) alignée avec la zone d'affichage (24) de l'élément de commande (22), vient rétro-éclairer les informations affichées dans cette zone pour les rendre visibles dans la zone d'affichage (24) de l'élément de commande (22).

2. Dispositif d'affichage selon la revendication 1,
**caractérisé en ce que** l'élément de commande (22) est réalisé sous la forme d'au moins une touche et/ou d'au moins un bouton rotatif (20) et/ou d'au moins un bouton rotatif/poussoir.

3. Dispositif d'affichage selon la revendication 1 ou 2,
**caractérisé en ce que** ladite au moins une source de lumière pour la lumière collimatée comprend au moins un élément lumineux, en particulier au moins une DEL, ainsi qu'un réflecteur (60) et/ou une lentille (62).

4. Dispositif d'affichage selon l'une des revendications 1 à 3,
**caractérisé en ce que** la zone de passage de lumière (54) de la plaque de guidage de lumière (34) pour la lumière collimatée est réalisée sous la forme d'un guide de lumière ou d'une ouverture traversante de la plaque de guidage de lumière (34).

5. Dispositif d'affichage selon l'une des revendications 1 à 4,
**caractérisé en ce que** ladite au moins une source de lumière pour la lumière collimatée est disposée de manière à être tournée vers la face arrière (39) de la plaque de guidage de lumière (34) ainsi que vers la zone de passage de lumière (54) de la plaque de guidage de lumière (34) pour la lumière collimatée.

6. Dispositif d'affichage selon l'une des revendications 1 ou 2,
**caractérisé en ce que** la source de lumière pour la lumière collimatée comprend au moins un élément lumineux, en particulier au moins une DEL, et un guide de lumière qui est muni d'une extrémité de sortie de lumière disposée à l'opposé de la zone de passage de lumière (54) de la plaque de guidage de lumière (34) pour la lumière collimatée ou dans la zone de passage de lumière (54) de la plaque de guidage de lumière (34) pour la lumière collimatée, et qui est muni d'une extrémité d'entrée de lumière disposée à l'extérieur de la face arrière (39) de la plaque de guidage de lumière (34).

7. Dispositif d'affichage selon la revendication 6,
**caractérisé par** plusieurs éléments de commande (22) et plusieurs zones d'affichage (50) sur la surface d'affichage (40) de l'écran (26), chacune étant alignée avec leurs zones d'affichage (24), auxquelles est associée, dans la plaque de guidage de lumière (34) de l'unité de rétroéclairage (32), une zone de passage de lumière (54) respective pour la lumière collimatée, l'unité de rétroéclairage (32) comportant, pour chaque zone de passage de lumière (54), au moins une source de lumière pour la lumière collimatée ou au moins une source de lumière pour la lumière collimatée qui est commune à toutes les zones de passage de lumière (54), à partir de laquelle des guides de lumière s'étendent vers les zones de passage de lumière (54) de la plaque de guidage de lumière (34).

8. Dispositif d'affichage selon l'une des revendications 1 à 7,
**caractérisé en ce que** ladite au moins une source de lumière pour la lumière collimatée (58) comprend une diode laser et, en particulier, un ensemble de diodes laser RVB.

9. Dispositif d'affichage selon l'une des revendications 1 à 8,
**caractérisé en ce que** les sources de lumière sont disposées à l'opposé de la face arrière de la plaque de guidage de lumière (34) et/ou d'une zone de bord latéral de la plaque de guidage de lumière (34).

10. Dispositif d'affichage selon l'une des revendications 1 à 9,
**caractérisé en ce que** les sources de lumière de rétroéclairage (38) comprennent des DELs.
